# EUROPÄISCHE PATENTANMELDUNG

(11) **EP 2 987 585 A1**
(43) Veröffentlichungstag der Anmeldung: **24.02.2016**
(21) Anmeldenummer: 14181906.0
(22) Anmeldetag: 22.08.2014
(51) Int. Cl.: B23K 26/38, B23K 26/08, B23K 26/10, B25J 19/00

(54) **Verfahren und Vorrichtung zum Laserschneiden von Fahrzeugleuchten und/oder Bauteilen von Fahrzeugleuchten, insbesondere Lichtscheiben von Fahrzeugleuchten**

(71) Anmelder: odelo GmbH, 70329 Stuttgart (DE)
(72) Erfinder: Pusch, Reiner, 73650 Winterbach (DE); Ricking, Thorsten, 71364 Winnenden (DE)
(74) Vertreter: Benninger, Johannes

(57) **Zusammenfassung**

Es werden ein Verfahren und eine Vorrichtung zum Laserschneiden von Bauteilen (02) von Fahrzeugleuchten (13) beschrieben. Das Verfahren sieht vor, eine Laserlichtquelle (05) translatorisch und rotatorisch im Raum zu bewegen und den von der Laserlichtquelle (05) ausgehenden Laserstrahl (09) auf eine herzustellende Schnittkante (07) eines ortsfest gehaltenen Bauteils (02) einer Fahrzeugleuchte (13) umzulenken. Hierbei ist vorgesehen, dass der Ort der Umlenkung (11) des Laserstrahls (09) einerseits entlang einer dem Verlauf der herzustellenden Schnittkante (07) in mathematischem Sinne ähnlichen, ortsfesten Bahnkurve (06) mechanisch geführt ist, und andererseits in einer Richtung parallel zu mindestens einem Abschnitt (B-C) des Verlaufs des Laserstrahls (09) gegenüber der Laserlichtquelle (05) beweglich ist, und dass die mechanische Führung des Orts der Umlenkung (11) lokal normal zur ortsfesten Bahnkurve (06) erfolgt, wohingegen die Bewegung des Orts der Umlenkung (11) entlang der ortsfesten Bahnkurve (06) durch die Bewegung der Laserlichtquelle (05) im Raum gesteuert erfolgt. Die Vorrichtung umfasst einen Manipulator (03) mit einem dreidimensional translatorisch sowie rotatorisch in insgesamt sechs Freiheitsgraden im Raum beweglichen Manipulatorkopf (04), eine an dem Manipulatorkopf (04) fest angeordnete Laserlichtquelle (05), und eine ortsfeste Aufnahme (10) zum Halten eines Bauteils (02) einer Fahrzeugleuchte (13). Die Vorrichtung zeichnet sich aus durch eine mechanische Kulissenführung (06), an der eine Umlenkeinrichtung (08) für einen von der Laserlichtquelle (05) abgegebenen Laserstrahl (09) entlang einer einer am zu beschneidenden Bauteil (02) herzustellenden Schnittkante (07) in mathematischem Sinne ähnlichen ortsfesten Bahnkurve beweglich angeordnet ist, welche Umlenkeinrichtung (08) den von der Laserlichtquelle (05) kommenden Laserstrahl (09) auf eine herzustellende Schnittkante (07) an einem Bauteil (02) einer Fahrzeugleuchte (13) umlenkt, wobei die Umlenkeinrichtung (08) in einer Richtung parallel zu mindestens einem Abschnitt (B-C) des von der Laserlichtquelle (05) kommend an der Umlenkeinrichtung (08) eintreffenden Laserstrahls (09) beweglich mit dem Manipulatorkopf (04) und/oder der am Manipulatorkof (04) fest angeordneten Laserlichtquelle (05) verbunden ist, von welcher Beweglichkeit wenigstens innerhalb diesen Abschnitts (B-C) verbleibende Richtungen ausgeschlossen sind.

## Beschreibung

Die Erfindung betrifft ein Verfahren gemäß dem Oberbegriff des Anspruchs 1 sowie eine Vorrichtung gemäß dem Oberbegriff des Anspruchs 10.

Mit zunehmender Fertigungspräzision in der Automobiltechnik steigen die Anforderungen an die Passgenauigkeit von Fahrzeugteilen. Dabei gilt das Hauptaugenmerk dem vom Endkunden unmittelbar erkennbaren äußeren Erscheinungsbild von Kraftfahrzeugen, oft widergespiegelt durch das so genannte Spaltmaß, welches für Maßhaltigkeit, Abstand sowie Lage, beispielsweise hinsichtlich einer Verdrehlage, zweier oder mehrerer erkennbar unterschiedlicher, aneinander angrenzender Fahrzeugteile steht. Dabei ist ein möglichst gleichmäßiges und/oder kleines Spaltmaß einzuhalten, um die Qualitätsanforderungen einerseits hinsichtlich des Erscheinungsbilds und andererseits hinsichtlich einer möglichst strömungsgünstigen und "aus einem Guss" erscheinenden Fahrzeugoberfläche bzw. -kontur zu erfüllen.

Besonders augenfällig ist dies bei Kraftfahrzeugleuchten im Allgemeinen und Kraftfahrzeugheckleuchten im Speziellen, welche sich je nach Kraftfahrzeugmodell teils nahtlos, teils mit möglichst präzise und gleichmäßig einzuhaltendem Spaltmaß bündig in die Karosserie bzw. Karosserieteile einfügen müssen.

Ausgehend von der Automobilindustrie breiten sich diese Anforderungen auch auf andere Industriezweige aus, welche Fahrzeuge beispielsweise für den Einsatz zu Lande, zu Wasser und in der Luft entwickeln und herstellen. Im Folgenden ist daher vereinfacht von Fahrzeugen und Fahrzeugleuchten die Rede, gleich ob es sich hierbei um Leuchten für im Sinne von landgestützten Kraftfahrzeugen motorisch angetriebene Automobile, oder um sonstige landgestützte Fahrzeuge, oder um Flugzeuge, Fluggeräte oder Fahrzeuge zur See handelt, es sei denn, es ist explizit etwas anderes erwähnt.

Eine Fahrzeugleuchte umfasst im Wesentlichen einen von einem Leuchtengehäuse und einer Lichtscheibe umschlossenen Leuchteninnenraum und mindestens ein darin beherbergtes Leuchtmittel mit zumindest einer Lichtquelle, sowie gegebenenfalls zugehörige Elektronikbauteile für wenigstens eine Lichtfunktion der Fahrzeugleuchte. In dem Leuchteninnenraum kann mindestens ein von außerhalb des Leuchteninnenraums durch eine oder mehrere von der Lichtscheibe verschlossene Lichtöffnungen hindurch gesehen hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Die Lichtscheibe ist durch eine zumindest innerhalb eines Wellenlängenbereichs elektromagnetischer Wellen transparente Abdeckung gebildet, welche den Leuchteninnenraum sowie die von diesem beherbergten Bauteile gegen Witterungseinflüsse schützt. Die Abdeckung ist hierbei wenigstens für einen Wellenlängenbereich transparent, der zumindest einen vom für das menschliche Auge sichtbaren Teil des Spektrums elektromagnetischer Wellen umfasst. Ein solcher Wellenlängenbereich wird nachfolgend als ein für das menschliche Auge sichtbarer Bereich bezeichnet.

Um den Eingangs erwähnten Anforderungen nachzukommen ist bekannt, Bauteile von Fahrzeugleuchten, insbesondere die typischerweise aus einem wenigstens in einem für das menschliche Auge sichtbaren Bereich transparenten Kunststoff hergestellte Lichtscheibe vor oder nach dem Zusammenbau einer Kraftfahrzeugleuchte vermittels Laserschneidens exakt zuzuschneiden.

Beim Laserschneiden handelt es sich um ein thermisches Trennverfahren, bei dem ein fokussierter Laserstrahl 09 den beispielsweise transparenten Kunststoff eines Bauteils 02 einer Fahrzeugleuchte 13 aufschmilzt und verdampft. Durch den geometrisch und thermisch exakt definierten Energieeintrag des Laserstrahls 09 können 2D- und 3D-Konturen somit berührungslos und kraftfrei geschnitten werden. Somit können wesentlich exaktere Toleranzbearbeitungen durchgeführt werden, als dies mit dem Stand der Technik entsprechenden mechanischen Bearbeitungsanlagen, bei denen die Aufnahmepunkte und/oder Anschlagelemente und/oder die Befestigungsvorrichtung bzw. deren Befestigungselemente gesetzt und/oder nachbearbeitet werden, möglich ist.

Beim Laserschneiden treten außerdem keine oder im Vergleich zu einer spanenden Bearbeitung nur sehr wenige Späne oder Partikel auf, die in spanenden Bearbeitungsanlagen trotz Absauganlagen zu Verschmutzungen oder sogar zu Partikeln im Leuchteninnenraum führen können.

Beim Laserschneiden wird eine hierfür vorgesehene, einen Laserstrahl erzeugende Laserlichtquelle vermittels eines automatisch gesteuerten, motorisch angetriebenen Manipulators, wie beispielsweise einem sechsachsigen Roboterarm, welcher die Lage und Ausrichtung eines Manipulatorkopfs und der an diesem angeordneten Laserlichtquelle und damit den Ausgangspunkt und die Richtung des von der Laserlichtquelle abgegebenen Laserstrahls im Raum verändert, entlang einer zu behandelnden Schnittlinie geführt.

Für die Führung sind grundsätzlich zwei Prozessparameter verantwortlich.

Ein erster Prozessparameter ist die Verfahrgeschwindigkeit. Die Verfahrgeschwindigkeit gibt an, mit welcher Geschwindigkeit der Laserstrahl entlang der herzustellenden Schnittkante bewegt wird, welche sich aus dem Verlauf einer entlang der der Laserlichtquelle zugewandten Oberfläche eines zu beschneidenden Bauteils verlaufenden Schnittlinie und einer sich an diese Schnittlinie anschließende, sich bei einem vollständigen Schnitt über die Dicke des Bauteils aus der Sicht des Ausgangspunkts des Laserstrahls gesehen erstreckende Schnittfläche zusammensetzt.

Ist die Verfahrgeschwindigkeit zu gering, schmilzt zu viel Material des zu beschneidenden Bauteils und verunreinigt das Schnittbild. Ist die Verfahrgeschwindigkeit zu hoch, kann es vorkommen, dass die Schnittfläche und damit der Schnitt nicht vollständig durch die gesamte Dicke des Bauteils hindurchgeht, wodurch es zu Bruchkanten kommen kann. Ist die Verfahrgeschwindigkeit nicht gleichmäßig, schwankt das Schnittbild zwischen den beiden Extremen.

Um ein möglichst gleichmäßiges Schnittbild zu erhalten, ist daher eine möglichst konstante, auf die Schmelzeigenschaften des Werkstoffs des zu beschneidenden Bauteils abgestimmte Verfahrgeschwindigkeit erforderlich.

Ein zweiter Prozessparameter ist die Verfahrbewegung. Die Verfahrbewegung spiegelt die Bewegungsbahn des Ausgangspunkts und die Richtung des von der Laserlichtquelle abgegebenen Laserstrahls im Raum wieder. Zusammen mit dem Abstand des Ausgangspunkts des von der Laserlichtquelle abgegebenen Laserstrahls von der auf der Oberfläche des zu behandelnden Bauteils verlaufenden Schnittlinie und der Lage des Ausgangspunkts und der Richtung des von der Laserlichtquelle abgegebenen Laserstrahls im Raum ergibt sich damit Verlauf und Lage der Schnittkante, entsprechend dem Verlauf der Schnittlinie ebenso wie dem Verlauf der sich an die auf der der Laserlichtquelle zugewandten Oberfläche des Bauteils verlaufende Schnittlinie anschließenden Schnittfläche.

Die Schnittfläche verläuft bevorzugt lokal normal zur angrenzenden Oberfläche des Bauteils, auf dem ein an die Schnittfläche angrenzender Punkt der Schnittlinie liegt, unter anderem, damit die Schnittfläche möglichst klein ist.

Während des Schneidvorganges muss hierbei ein definierter Abstand zwischen Bauteil und dem Ausgangspunkt des Laserstrahls eingehalten werden, da die Geometrie des Laserstrahls nur in einem begrenzten Bereich eine zylindrische Kontur aufweist und nur in dieser Zone ein rechtwinkliger Beschnitt möglich ist. Am Anfang und am Ende des Laserstrahls ist dessen Geometrie konkav.

Die am Manipulatorkopf angeordnete Laserlichtquelle wird vermittels des Manipulators entsprechend der beiden Prozessparameter innerhalb der Steuerungsgenauigkeit des Manipulators geführt. Die dem Verlauf des Laserstrahls von seinem Ausgangspunkt an der Laserlichtquelle entsprechende geometrische Achse des Austritts des Laserstrahls aus der Laserlichtquelle ist hierbei gleich der lokal die Schnittkante tangierenden geometrischen Achse des Eintritts des Laserstrahls in das Bauteil.

Ein damit einhergehendes Problem ist, dass entlang zwei- oder mehrdimensional gekrümmt verlaufenden Schnittlinien der Manipulatorkopf entlang unterschiedlicher Freiheitsgrade des Manipulators gemeinsam oder unabhängig voneinander gesteuert verfährt.

Steuerungstechnisch ist das Abfahren einer geradlinigen Verbindung von einem Startpunkt zu einem Endpunkt eine Aneinanderreihung unendlich vieler Einzelpunkte.

Durch Bahnkorrekturen beim Anfahren der Koordinaten der Einzelpunkte während des Bewegungsvorganges, ist das Ergebnis keine geradlinige Verbindung. Die real angefahrenen Einzelpunkte liegen links und/oder rechts und/oder auf einer gedachten Verbindungslinie.

Mit anderen Worten werden bei einem Laserbeschnitt eines nicht ebenen, beispielsweise zwei- oder dreidimensional gekrümmt- und/oder gewölbten Bauteils, wie etwa einer einen Karosserieverlauf fortführenden Fahrzeugleuchte, alle sechs Freiheitsgrade eines Manipulators im Einsatz, entsprechend beispielsweise allen sechs Achsen eines sechsachsigen Roboterarms. Durch kinematische Gesetzmäßigkeiten u. fertigungstechnische Toleranzen im Roboter-System, zeigt sich:
a.) ein Driftverhalten das als Bahngenauigkeit definiert ist. Die erreichbare Masshaltigkeit eines zu beschneidenden Bauteils wird unter Anderem durch die Bahngenauigkeit bestimmt, mit welcher der Manipulator in der Lage ist, den Manipulatorkopf und die an diesem angeordnete Laserlichtquelle zu führen. Dabei nimmt die Bahngenauigkeit um so stärker ab, je stärker der kurz auch als Geometrie bezeichnete Flächenverlauf eines zu beschneidenden Bauteils von einer ebenen Form abweicht und je komplexer ein auszuführender Schnitt verläuft, beispielsweise um ein von der ebenen Form abweichendes, zweidimensional (2D) gekrümmtes oder dreidimensional (3D) gekrümmt- und gewölbtes Bauteil umlaufend. Bei einem ebenen Flächenverlauf bildet ein Querschnitt in jeder Richtung durch den Flächenverlauf eine Gerade, wohingegen bei einem zweidimensional gekrümmten Flächenverlauf nur ein Querschnitt in einer Richtung durch den Flächenverlauf eine Gerade bildet, und sich bei einem dreidimensional gekrümmten Flächenverlauf kein Querschnitt mit einem geraden Verlauf findet. Dabei ist für kurze Schnittlängen bei Bauteilen einfacher Geometrie und einfachem Verlauf des Schnitts eine Bahngenauigkeit von +/- 0,1 mm erreichbar. Bei Beschneidung komplexer 3D-Geometrien, bzw. einer umlaufenden Bearbeitung beispielsweise einer Lichtscheibe, nimmt die Bahngenauigkeit beträchtlich ab.
b.) dass durch die kinematischen Verhältnisse (z.B. Schwerkraft, Massenträgheit, etc) bei einer bestimmten Achsenkonstellation Kippmomente um die betroffenen Achsen entstehen. Diese Kippmomente verursachen - kurzzeitig - eine ungewollte Bewegung des Manipulatorkopfs. Durch die direkte Anordnung der Laserlichtquelle am Manipulatorkopf übertragen sich diese Bewegungen direkt, teils durch den Abstand zwischen Austrittspunkt des Laserstrahls und Eintrittspunkt des Laserstrahls in das zu beschneidende Bauteil verstärkt, auf die Schnittkante. Dies führt zu einem Nachschwingen und/oder temporären Fehlpositionierung des Ausgangspunkts und der Austrittsrichtung des Laserstrahls, was sich wiederum in einem unregelmäßigen, nicht maßhaltigen Verlauf der Schnittkante wiederspiegelt und die Anmutung der Schnittkante negativ beeinflusst.

Aufgrund der Steuerungs- und Massenträgheit des Manipulators und aufgrund von Toleranzen der Führung des Manipulatorkopfs ergibt sich hierdurch ein mit bloßem Auge erkennbar gezacktes Schnittbild der Schnittkante, einhergehend mit einer rauen Anmutung und einem sich damit einstellenden negativen Qualitätseindruck.

Um dieses gezackte Schnittbild der Schnittkante zu beheben, bedarf es eines aufwändigen Nachbearbeitungsprozesses, der wiederum Beschädigungen an Bauteilen und/oder Fahrzeugleuchten zur Folge haben kann, was zu Ausschuss führt, der einerseits kostspielig ist, und andererseits eine Ressourcenverschwendung darstellt.

Ein Ziel ist daher neben der geforderten Masshaltigkeit, dass die optische Anmutung der Schnittkante, der einer spritzgegossenen Fläche entsprechen soll.

Um dieses Ziel zu erreichen, sind grundsätzlich mehrere Lösungsansätze denkbar:
1. Achssystem auf Achssystem. Grobe Verfahrwege werden vom Manipulator durchgeführt. Eine Feinbewegung erfolgt über ein zusätzlich am Manipulatorkopf angebrachtes Achsensystem. Nachteilig hieran ist, dass Signalverarbeitungszeiten zur Erzeugung von Steuerungssignalen für das am Manipulatorkopf angebrachte Achsensystem weiterhin zu Ungenauigkeiten der Masshaltigkeit oder zu einer erheblichen Verlangsamung der Verfahrgeschwindigkeit führen, einhergehend mit einer nicht zufriedenstellenden Anmutung der Schnittkante, sei es aufgrund einer zu geringen Verfahrgeschwindigkeit oder aufgrund eines hieraus resultierenden diskontinuierlichen Betriebs der Laserlichtquelle während der Ausführung eines Schnitts.
2. Lineares Führungssystem. Ein linearer Verfahrweg führt direkt zu einer linearen Schnittkante. Nachteilig hieran ist, dass ein lineares Führungssystem nicht geeignet ist, der Komplexität einer 3D-Geometrie zu folgen. Dadurch ist der Einsatzbereich eines linearen Führungssystems begrenzt.
3. Zustellbewegung über Werkstückträgersystem. Sich hierdurch ergebende Nachteile sind die Verlagerung der Probleme auf ein anderes System, hier dem Werkstückträgersystem. Dabei gilt, je mehr Systeme im Eingriff sind, desto größer die Summe der Toleranzen.
4. Aufteilung der Zustellbewegungen auf mehrere Systeme
5. Senkrechte Ausrichtung des zu beschneidenden Bauteils in Aufnahme und dadurch in Richtung Fahrzeugeinbausituation mit dem Ziel, Schwerkrafteinflüsse auf die Positioniergenauigkeit des Manipulators zu verringern. Nachteilig hieran ist, dass hierdurch keine vollständige Reduzierung der mechanische Störgrößen möglich ist. Dadurch muss das optimale Ergebnis durch Versuch und Irrtum ermittelt werden, was zu hohen Kosten einhergehend mit hohem Ausschuss führt. Darüber hinaus kann hierzu eine Positionierung des zu beschneidenden Bauteils gegen Schwerkraft erforderlich sein, was einen erhöhten Aufwand der Gestaltung der Aufnahmetechnik nach sich zieht und außerdem zusätzliche Probleme außer den zu behebenden einführt.
6. Dynamische Bahnberechnung. Das Steuerungsprogramm berechnet vorlaufend eine gewisse Anzahl von Punkte und idealisiert die Bewegung des Manipulatorkopfs. Nachteilig hieran ist, dass hierdurch keine vollständige Geradlinigkeit der Bewegungsbahn des Ausgangspunkts des Laserstrahls erreichbar ist.
7. Nachführung der Laserdüse durch Ermittlung des Abstands Laserdüse zu Leuchtenoberfläche mittels Sensorik. Nachteilig hieran ist, dass ein sensorisch nachführendes System instabil sein kann und sich daher aufschwingen kann, was zu undefinierten Bahnkorrekturen führt. Die Qualität der Schnittkante sinkt ebenso wie deren Anmutung. Ein zusätzlicher Nachteil ergibt sich durch die Signalverarbeitungsgeschwindigkeit. Die Berechnung der Steuerungssignale zur Bahnkorrektur benötigt Zeit, wodurch die Bahnkorrektur Zeit- und somit auch ortsversetzt erfolgt.

Grundsätzliche Nachteile der aufgelisteten, denkbaren Lösungsansätze sind, dass sie zumindest zum Teil mechanisch und steuerungstechnisch sehr komplex sind und dadurch vom Bedienpersonal nicht mehr selbständig anwendbar sind. Es werden Spezialisten benötigt. Zusätzliche Nachteile sind deren hohe Investitionskosten, wobei das Verhältnis Aufwand zu Nutzen fraglich ist. Ferner bieten die genannten Lösungsansätze keine vollständige Lösung der Probleme und führen darüber hinaus zusätzliche Probleme ein.

Durch DE 20 2006 021 021 U1 ist eine Laserschneideeinrichtung zur dreidimensionalen (3D) Bearbeitung von Werkstücken bekannt. Die Laserschneideeinrichtung ist im Inneren eines als Laserschutzkabine ausgebildeten Arbeitsraums beherbergt. Von einer an einem Laserschneidkopf der Laserschneideeinrichtung vorgesehenen Laserlichtquelle aus wird im regulären Schneidbetrieb ein Laserstrahl auf das zu bearbeitende Werkstück gerichtet.

Eine Aufgabe der Erfindung ist, ein Verfahren und eine Vorrichtung zum Laserschneiden von Fahrzeugleuchten und/oder Bauteilen von Fahrzeugleuchten, insbesondere Lichtscheiben von Fahrzeugleuchten, anzugeben, welche die Schaffung von Schnittkanten hoher Anmutung erlauben.

Die Aufgabe wird jeweils durch die Merkmale der unabhängigen Ansprüche gelöst. Weitere vorteilhafte Ausgestaltungen werden durch die Unteransprüche beschrieben.

Ein erster Gegenstand der Erfindung betrifft demnach ein Verfahren zum Laserschneiden von nachfolgend unter dem Begriff Bauteil zusammengefassten Fahrzeugleuchten und/oder Bauteilen von Fahrzeugleuchten, insbesondere Lichtscheiben von Fahrzeugleuchten.

Das Verfahren sieht vor, eine Laserlichtquelle in drei voneinander in mathematischem Sinne unabhängigen Richtungen translatorisch und um drei voneinander in mathematischem Sinne unabhängigen Achsen rotatorisch im Raum zu bewegen.

Das Verfahren sieht ferner vor, den von der Laserlichtquelle ausgehenden Laserstrahl auf eine herzustellende Schnittkante eines ortsfest gehaltenen Bauteils einer Fahrzeugleuchte umzulenken.

Das Verfahren zeichnet sich dadurch aus, dass der Ort der Umlenkung des Laserstrahls einerseits entlang einer dem Verlauf der herzustellenden Schnittkante in mathematischem Sinne ähnlichen, ortsfesten Bahnkurve mechanisch geführt ist, und andererseits in genau einer Richtung entlang eines Abschnitts des Verlaufs des von der Laserlichtquelle ausgehenden Laserstrahls zum Ort der Umlenkung gegenüber der Laserlichtquelle im Bereich diesen Abschnitts des Laserstrahls beweglich angeordnet ist.

Die Bewegung der Laserlichtquelle im Raum führt damit den Ort der Umlenkung des Laserstrahls auf die herzustellende Schnittkante des Bauteils der Fahrzeugleuchte entlang der der herzustellenden Schnittkante in mathematischem Sinne ähnlichen Bahnkurve.

Ungenauigkeiten der Bewegung der Laserlichtquelle im Raum haben dabei keine oder eine nur geringe Auswirkung auf den Verlauf der herzustellenden Schnittkante.

In der ein Teilgebiet der Mathematik darstellenden Geometrie sind zwei Figuren genau dann zueinander ähnlich, wenn sie durch eine häufig als Ähnlichkeit bezeichnete Ähnlichkeitsabbildung ineinander überführt werden können. Im Sinne der vorliegenden Erfindung sind die Bahnkurve, entlang welcher der Ort der Umlenkung während der Bewegung der Laserlichtquelle im Raum geführt wird, und der Verlauf der herzustellenden Schnittkante ähnlich, wenn eine geometrische Abbildung existiert, die sich aus zentrischen Streckungen und Kongruenzabbildungen, wie beispielsweise Verschiebungen, Drehungen, Spiegelungen zusammensetzen lässt und die Bahnkurve auf die herzustellende Schnittkante abbildet. Winkel und Streckenverhältnisse stimmen bei durch die Bahnkurve und die herzustellende Schnittkante gebildeten, ähnlichen Figuren überein. Ähnlichkeit erweitert somit die Kongruenz um die Möglichkeit der Streckung.

Die mechanische Führung des Orts der Umlenkung erfolgt damit lediglich lokal normal zur ortsfesten Bahnkurve, wohingegen die Bewegung des Orts der Umlenkung entlang der ortsfesten Bahnkurve, bevorzugt ebenso die Neigung des Orts der Umlenkung um eine die ortsfeste Bahnkurve lokal tangierende Achse durch die Bewegung der Laserlichtquelle im Raum gesteuert erfolgt.

Dadurch kann die Umlenkung in konstantem Winkel stattfinden.

Der Laserstrahl kann am Ort der Umlenkung um 90° umgelenkt werden.

Der Laserstrahl kann zwischen der Laserlichtquelle und dem mechanisch entlang der einer herzustellenden Schnittkante in mathematischem Sinne ähnlichen ortsfesten Bahnkurve geführten Ort der Umlenkung ein weiteres mal oder öfters umgelenkt werden, vorzugsweise unter dem selben Winkel wie am Ort der Umlenkung, bevorzugt jedoch in einer der Umlenkung am Ort der Umlenkung entgegengesetzten Richtung. Hierdurch kann ein besonders kompakter Aufbau einer Vorrichtung zur Durchführung des Verfahrens erhalten werden, bei dem die Laserlichtquelle grundsätzlich auf das zu beschneidende Bauteil gerichtet im Raum geführt wird, der Laserstrahl aber zunächst in einer Richtung zum Ort der Umlenkung umgeleitet wird, in welcher Richtung der Ort der Umlenkung beweglich gegenüber der Laserlichtquelle angeordnet beziehungsweise beweglich mit der Laserlichtquelle verbunden ist. Am Ort der Umlenkung findet wiederum die Umlenkung des Laserstrahls auf die herzustellende Schnittkante am zu beschneidenden Bauteil statt.

In Bezug auf den Verlauf des Laserstrahls ausgehend von der Laserlichtquelle kann entlang eines Abschnitts des Laserstrahls vor der weiteren Umlenkung eine zusätzliche Beweglichkeit vorgesehen sein, die wiederum eine Bewegung nur in Richtung parallel zum Verlauf des Laserstrahls in dem entsprechenden Abschnitt zulässt.

Das Verfahren sieht demnach wenigstens vor, den von der Laserlichtquelle ausgehenden Laserstrahl nicht direkt auf eine an einem von der Laserlichtquelle beabstandeten, ortsfesten, zu beschneidenden Bauteil einer Fahrzeugleuchte herzustellende Schnittkante zu richten, sondern auf eine Umlenkeinrichtung, die entlang einer von der Führung der Laserlichtquelle im Raum unabhängigen, der herzustellenden Schnittkante in mathematischem Sinne ähnlichen, beispielsweise durch eine Kulissenführung gebildete Bahnkurve mechanisch geführt ist. Die Neigung der Umlenkeinrichtung zu einem lokalen Abschnitt der Bahnkurve ebenso wie der Fortschritt der Bewegung der Umlenkeinrichtung entlang der Bahnkurve wird durch die Bewegung der Laserlichtquelle im Raum gesteuert. Die Laserlichtquelle und die Umlenkeinrichtung sind hierzu in einer parallel zu einem im Verlauf des Laserstrahls ausgehend von der Laserlichtquelle vor der Umlenkung an der Umlenkeinrichtung liegenden Abschnitt des Laserstrahls verlaufenden Richtung relativ zueinander beweglich miteinander verbunden, wohingegen Bewegungen in einer anderen Richtung, als der parallel zu dem im Verlauf des Laserstrahls ausgehend von der Laserlichtquelle vor der Umlenkung an der Umlenkeinrichtung liegenden Abschnitt des Laserstrahls verlaufenden Richtung ausgeschlossen sind.

Das Verfahren kann vorsehen, die Laserlichtquelle vermittels eines Manipulators translatorisch und rotatorisch im Raum zu bewegen.

Das Verfahren kann vorsehen, die Laserlichtquelle an einem vermittels eines Manipulators in drei voneinander in mathematischem Sinne unabhängigen Richtungen im Raum translatorisch und um drei voneinander in mathematischem Sinne unabhängigen Achsen rotatorisch beweglich angetriebenen Manipulatorkopf zu führen.

Ein zweiter Gegenstand der Erfindung betrifft eine Vorrichtung zum Laserschneiden von nachfolgend unter dem Begriff Bauteil zusammengefassten Fahrzeugleuchten und/oder Bauteilen von Fahrzeugleuchten, insbesondere Lichtscheiben von Fahrzeugleuchten.

Die Vorrichtung umfasst einen Manipulator mit einem dreidimensional translatorisch sowie rotatorisch in insgesamt sechs Freiheitsgraden, drei translatorischen und drei rotatorischen Freiheitsgraden, im Raum beweglichen Manipulatorkopf.

Die Vorrichtung umfasst ferner eine an dem Manipulatorkopf fest angeordnete Laserlichtquelle.

Außerdem umfasst die Vorrichtung eine ortsfeste Aufnahme zum Halten eines Bauteils einer Fahrzeugleuchte.

Darüber hinaus umfasst die Vorrichtung eine mechanische Kulissenführung, an der eine Umlenkeinrichtung für einen von der Laserlichtquelle abgegebenen Laserstrahl entlang einer einer am zu beschneidenden Bauteil herzustellenden Schnittkante in mathematischem Sinne ähnlichen ortsfesten Bahnkurve beweglich angeordnet ist.

Die Umlenkeinrichtung lenkt den von der Laserlichtquelle kommenden Laserstrahl auf eine herzustellende Schnittkante an einem Bauteil einer Fahrzeugleuchte um.

In Bezug auf die Kulissenführung ist die Umlenkeinrichtung in ihrer Neigung zur Bahnkurve vorzugsweise frei beweglich. Die Kulissenführung kann jedoch alternativ derart ausgeführt sein, dass die Umlenkeinrichtung sowohl entlang der Bahnkurve, als auch in ihrer Neigung normal zur Bahnkurve gesehen gegenüber der Bahnkurve geführt ist.

Die Kulissenführung kann durch einen oder mehrere Stäbe mit einem der Bahnkurve folgenden Verlauf ausgeführt sein, entlang dem oder denen beispielsweise vermittels einer oder mehreren Rollen oder vermittels Gleitlager geführt, die Umlenkeinrichtung beweglich ist.

Die Umlenkeinrichtung ist in einer Richtung parallel zum von der Laserlichtquelle kommend an der Umlenkeinrichtung eintreffenden Laserstrahl beweglich mit dem Manipulatorkopf und/oder der am Manipulatorkof fest angeordneten Laserlichtquelle verbunden. Die bewegliche Verbindung bezieht sich ausschließlich auf diese Richtung. Verbleibende Richtungen sind zumindest entlang diesen Abschnitts des Laserstrahls von dieser Beweglichkeit ausgeschlossen, demgemäß die Umlenkeinrichtung in den verbleibenden Richtungen vorzugsweise fest mit dem Manipulatorkopf und/oder der am Manipulatorkof fest angeordneten Laserlichtquelle verbunden ist.

Durch eine Bewegung der Laserlichtquelle im Raum wird die Umlenkeinrichtung entlang der von der Kulissenführung vorgegebenen, einer am zu beschneidenden, ortsfest gehaltenen Bauteil herzustellenden Schnittkante in mathematischem Sinne ähnlichen, ortsfesten Bahnkurve geführt. Dadurch wird der von der Laserlichtquelle kommende und von der Umlenkeinrichtung auf die herzustellende Schnittkante umgelenkte Laserstrahl von dem nachfolgend auch als Laserdüse bezeichnete Umlenkpunkt der Umlenkeinrichtung präzise auf die herzustellende Schnittkante gerichtet und entlang der herzustellenden Schnittkante geführt.

Zwischen der Laserlichtquelle und der Umlenkeinrichtung kann mindestens eine weitere Umlenkung des Laserstrahls vorgesehen sein.

Ist eine weitere Umlenkung zwischen der Laserlichtquelle und der Umlenkeinrichtung vorgesehen, so kann eine zusätzliche Beweglichkeit der Umlenkeinrichtung gegenüber der Laserlichtquelle vorgesehen sein, wobei diese zusätzliche Beweglichkeit entlang eines Abschnitts des von der Laserlichtquelle kommenden Laserstrahls vorgesehen ist, die eine andere Richtung aufweist, als der Laserstrahl zwischen der weiteren Umlenkung und der Umlenkeinrichtung.

Eine solche weitere Umlenkung erfolgt bevorzugt unter gleichem Winkel, jedoch vorzugsweise in beispielsweise entgegengesetzter Richtung zur Umlenkung des Laserstrahls in der Umlenkeinrichtung.

Zumindest die Umlenkeinrichtung kann zur Umlenkung des Laserstrahls ein oder mehrere Prismen mit in diesen stattfindender Totalreflexion und/oder Spiegel umfassen.

Die Umlenkeinrichtung kann zur Behandlung des Laserstrahls, beispielsweise zur Fokussierung des Laserstrahls, ein oder mehrere optische Elemente, beispielsweise Linsen, umfassen.

Die Kulissenführung gleicht Ungenauigkeiten in der Bewegungssteuerung des Manipulatorkopfs aus und führt eine Feinjustierung des vermittels der Umlenkeinrichtung auf die herzustellende Schnittkante umgelenkten Laserstrahls aus.

Das für die bauteilseitige Masshaltigkeit relevante Element ist der nach Daten konturgenaue Verfahrweg der Laserdüse entlang der von der Kulissenführung vorgegebenen Bewegungsbahn. Die Laserdüse wird in der Kulissenführung zumindest entlang der einer am zu beschneidenden Bauteil herzustellenden Schnittkante in mathematischem Sinne ähnlichen, ortsfesten Bahnkurve mechanisch zwangsgeführt. Die Kulissenführung entspricht dadurch einer Schablone. Um die Schablone auch für 3D-Geometrien anwenden zu können, wird die Laserdüse vermittels des die Laserlichtquelle tragenden Manipulatorkopfs entsprechend deren Bewegung im Raum entlang der einer am zu beschneidenden Bauteil herzustellenden Schnittkante in mathematischem Sinne ähnlichen, ortsfesten Bahnkurve mechanisch geführt. Die Laserdüse der Umlenkeinrichtung ist mit dem Manipulatorkopf toleranzausgleichend, quasi via eines Toleranzausgleichsmoduls, in Richtung parallel zum von der Laserlichtquelle kommend an der Umlenkeinrichtung eintreffenden Laserstrahl beweglich, beispielsweise elastisch verbunden, wohingegen translatorische Bewegungen zwischen der Umlenkeinrichtung und dem Manipulatorkopf quer zur Richtung parallel des von der Laserlichtquelle kommend an der Umlenkeinrichtung eintreffenden Laserstrahls ausgeschlossen sind, ebenso wie rotatorische Bewegungen zwischen der Umlenkeinrichtung und dem Manipulatorkopf zumindest um solche Rotationsachsen, die nicht mit dem von der Laserlichtquelle kommend an der Umlenkeinrichtung eintreffenden Laserstrahl übereinstimmen. Störgrößen aus translatorischen und/oder rotatorischen Bewegungen des Manipulatorkopfs werden hierbei nicht vom Manipulatorkopf auf die Umlenkeinrichtung übertragen, sondern durch die Relativbeweglichkeit zwischen Umlenkeinrichtung und Manipulatorkopf in Richtung parallel zum von der Laserlichtquelle kommend an der Umlenkeinrichtung eintreffenden Laserstrahl, beispielsweise über elastische Elemente, aufgenommen. Hierdurch sind Relativbewegungen entlang des von der Laserlichtquelle kommend an der Umlenkeinrichtung eintreffenden Laserstrahls möglich, welche keinerlei Einfluss auf die Ausrichtung des Laserstrahls von der Laserdüse auf die herzustellende Schnittkante an einem Bauteil hat.

Sowohl die Vorrichtung, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung alternativ oder zusätzlich einzelne oder eine Kombination mehrerer zuvor oder nachfolgend in Verbindung mit dem Verfahren beschriebene Merkmale aufweisen, ebenso wie das Verfahren alternativ oder zusätzlich einzelne oder eine Kombination mehrerer zuvor oder nachfolgend in Verbindung mit der Vorrichtung beschriebene Merkmale aufweisen kann.

Sowohl die Vorrichtung, als auch das Verfahren erlauben dabei gleichzeitig eine unterbrechungsfreie Zuführung des Laserstrahles mit einer gleichbleibenden Verfahrgeschwindigkeit sowie eine äußerst präzise und gleichförmige Verfahrbewegung.

Technische Vorteile ergeben sich durch einen präziseren Laserzuschnitt von Bauteilen von oder für Fahrzeugleuchten, insbesondere von Lichtscheiben, mit besonders hoher Anmutung.

Die Anmutung der Schnittkante wird sowohl von der Gleichmäßigkeit der Verfahrgeschwindigkeit, als auch von der Gleichförmigkeit der Verfahrbewegung beeinflusst. Die Erfindung ermöglicht eine Verbesserung der Präzision beim Laserschneiden von Bauteilen von Fahrzeugleuchten, insbesondere der Herstellung von Schnittkanten an zwei- oder mehrdimensional gekrümmt verlaufenden Lichtscheiben.

Die getroffenen Maßnahmen erlauben eine Trennung der störgrößenbehafteten Führung der Laserlichtquelle vom zu beschneidenden Bauteil.

Sich hierdurch ergebende Vorteile sind, dass:
- die grundsätzlichen Vorteile einer Führung der Laserlichtquelle im Raum vermittels eines Manipulators, wie beispielsweise eines sechsachsigen Roboterarms, eines Tri- oder Quadropoden, um ohne Anspruch auf Vollständigkeit einige denkbare Ausgestaltungen von Manipulatoren zu nennen, weiterhin nutzbar bleiben, einhergehend mit einer hohen Flexibilität beispielsweise zum Beschneiden unterschiedlicher Bauteile und/oder dem Abfahren komplexer 3D-Geometrien.
- kostengünstigere Manipulatoren einsetzbar sind, die aufgrund ihrer Ungenauigkeit in der Führung der Laserlichtquelle im Raum ansonsten nicht verwendet werden könnten, um eine auch nur annähernd zufriedenstellende Anmutung der Schnittkante zu erhalten.
- die mechanische u. steuerungstechnische Komplexität gravierend sinkt.
- sich die Programmierung auf den Manipulator beschränkt, einhergehend mit geringeren Personalkosten.
- weiterhin eine vereinfachte Aufnahmetechnik unter Ausnutzung der Schwerkraft für das zu beschneidende Bauteil erhalten bleibt.
- eine gleichförmige Bewegung des Orts der Umlenkung des Laserstrahls und damit des für die Herstellung der Schnittkante maßgeblichen, dem Ort der Umlenkung entsprechenden, auch als Laserdüse bezeichneten Umlenkpunkt des Laserstrahls gewährleistet ist.
- die Qualität und Anmutung der Schnittkante gleichbleibend ist, unabhängig von den Abmessungen und/oder der Komplexität des Verlaufs der herzustellenden Schnittkante.
- das Toleranzfeld unabhängig von der Größe des Verfahrweges und damit von den Abmessungen und/oder der Komplexität des Verlaufs der herzustellenden Schnittkante gleichbleibend ist.

Ein besonders hervorzuhebender Vorteil gegenüber dem Stand der Technik ist eine Kompensation der Störgrößen in Echtzeit, da keine Signalverarbeitungszeit zu berücksichtigen ist. Stattdessen wird der Ort der Umlenkung entlang der ortsfesten, dem Verlauf der herzustellenden Schnittkante in mathematischem Sinne ähnlichen Bahnkurve mechanisch geführt.

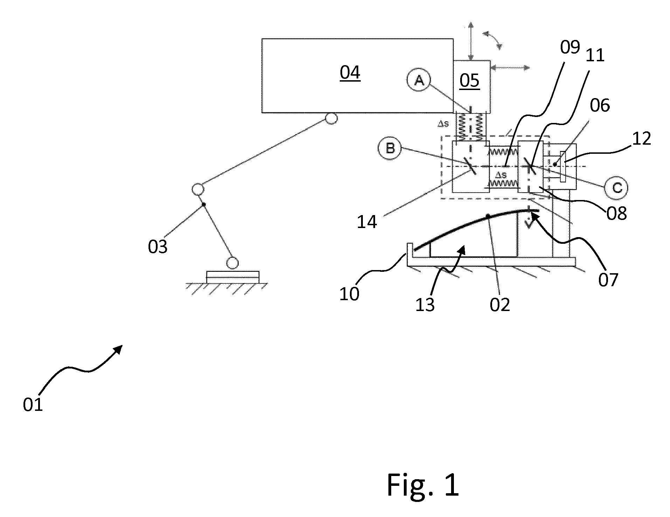

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Die einzige Zeichnung Fig. 1 zeigt in schematischer Darstellung eine Vorrichtung zum Laserschneiden von Fahrzeugleuchten und/oder Bauteilen von Fahrzeugleuchten, insbesondere Lichtscheiben von Fahrzeugleuchten.

Eine in Fig. 1 dargestellte Vorrichtung 01 zum Laserschneiden von nachfolgend unter dem Begriff Bauteil 02 zusammengefassten Fahrzeugleuchten 13 und/oder Bauteilen 02 von Fahrzeugleuchten 13, insbesondere Lichtscheiben von Fahrzeugleuchten 13, umfasst
- einen Manipulator 03 mit einem dreidimensional translatorisch sowie rotatorisch in insgesamt sechs Freiheitsgraden, drei translatorischen und drei rotatorischen Freiheitsgraden, im Raum beweglichen Manipulatorkopf 04,
- eine an dem Manipulatorkopf 04 fest angeordnete Laserlichtquelle 05,
- eine mechanische Kulissenführung 06 entlang einer einer am zu beschneidenden Bauteil 02 herzustellenden Schnittkante 07 in mathematischem Sinne ähnlichen, in Fig. 1 lokal normal zur Zeichenebene verlaufenden, ortsfesten Bahnkurve,
- eine Umlenkeinrichtung 08 für einen von der Laserlichtquelle 05 abgegebenen Laserstrahl 09, welche an der Kulissenführung 06 entlang der einer am zu beschneidenden Bauteil 02 herzustellenden Schnittkante 07 in mathematischem Sinne ähnlichen ortsfesten Bahnkurve beweglich angeordnet ist.

Die Umlenkeinrichtung 08 lenkt den von der Laserlichtquelle 05 kommenden Laserstrahl 09 auf die herzustellende Schnittkante 07 an dem beispielsweise in einer Aufnahme 10 ortsfest gehaltenen Bauteil 07 einer Fahrzeugleuchte 13 um.

Die Umlenkeinrichtung 08 ist in einer Richtung parallel zu mindestens einem Abschnitt B-C des Verlaufs des von der Laserlichtquelle 05 kommend an der Umlenkeinrichtung 08 eintreffenden Laserstrahls 09 beweglich mit dem Manipulatorkopf 04 und/oder der am Manipulatorkof 04 fest angeordneten Laserlichtquelle 05 verbunden. Die bewegliche Verbindung entlang diesen Abschnitts B-C bezieht sich ausschließlich auf diese Richtung. Demgemäß ist die Umlenkeinrichtung im Bereich eines entsprechenden Abschnitts B-C des Laserstrahls 09 in den verbleibenden Richtungen fest mit dem Manipulatorkopf 04 und/oder der am Manipulatorkof 04 fest angeordneten Laserlichtquelle 05 verbunden.

Von dieser Beweglichkeit der Verbindung der Umlenkeinrichtung 08 mit dem Manipulatorkopf 04 und/oder der am Manipulatorkof 04 fest angeordneten Laserlichtquelle 05 in einer nachfolgend auch als erste Richtung bezeichneten Richtung parallel zum von der Laserlichtquelle 05 kommend an der Umlenkeinrichtung 08 eintreffenden Laserstrahl 09 sind demnach verbleibende Richtungen ausgeschlossen.

Dadurch wird durch eine Bewegung der Laserlichtquelle 05 beziehungsweise des Manipulatorkopfs 04 im Raum die Umlenkeinrichtung 08 entlang der von der Kulissenführung 06 vorgegebenen, einer am zu beschneidenden, ortsfest gehaltenen Bauteil herzustellenden Schnittkante 07 in mathematischem Sinne ähnlichen, ortsfesten Bahnkurve geführt und der von der Laserlichtquelle 05 kommende und von der Umlenkeinrichtung 08 auf die herzustellende Schnittkante 07 umgelenkte Laserstrahl 09 von dem nachfolgend auch als Laserdüse bezeichnete Umlenkpunkt 11 der Umlenkeinrichtung 08 präzise auf die herzustellende Schnittkante 07 gerichtet und entlang dieser geführt.

Die Kulissenführung 06 gleicht Ungenauigkeiten in der Bewegungssteuerung des Manipulatorkopfs 04 aus und führt eine Feinjustierung des vermittels der Umlenkeinrichtung 08 auf die herzustellende Schnittkante umgelenkten Laserstrahls 09 aus.

Die Umlenkeinrichtung 08 kann in ihrer Neigung zur von der Kulissenführung 06 vorgegebenen Bahnkurve frei beweglich sein.

Die Umlenkeinrichtung 08 kann vermittels der Kulissenführung 06 alternativ sowohl entlang der von der Kulissenführung 06 vorgegebenen Bahnkurve, als auch in ihrer Neigung normal zur von der Kulissenführung 06 vorgegebenen Bahnkurve gesehen mechanisch geführt sein.

Die Kulissenführung 06 kann durch einen oder mehrere Stäbe mit einem der Bahnkurve folgenden Verlauf ausgeführt sein, entlang dem oder denen die Umlenkeinrichtung beweglich ist.

Alternativ kann die Kulissenführung 06 wie in Fig. 1 dargestellt eine gegebenenfalls mit einer Hintergreifung ausgeführte Nut 12 aufweisen, entlang deren Verlauf die Umlenkeinrichtung 08 geführt ist.

Die Umlenkeinrichtung 08 kann entlang der Kulissenführung 06 vermittels einer oder mehreren Rollen oder vermittels Gleitlager geführt sein.

Zwischen der Laserlichtquelle 05 und der Umlenkeinrichtung 08 kann wie in Fig. 1 dargestellt mindestens eine weitere Umlenkung 14 des Laserstrahls 09 vorgesehen sein.

Entlang eines Abschnitts A-B zwischen der Laserlichtquelle 05 und der weiteren Umlenkung 14 kann wie in Fig. 1 dargestellt eine zusätzliche Beweglichkeit zwischen der Umlenkeinrichtung 08 und der Laserlichtquelle 05 vorgesehen sein, jedoch in einer von der ersten Richtung unabhängigen, zweiten Richtung. Parallel zu dieser zweiten Richtung verläuft der Laserstrahl 09 von der Laserlichtquelle 05 kommend zur Umlenkung 14. Hierdurch können weitere Störgrößen der Bewegung des Manipulatorkopfs 04 im Raum auf die Führung der Laserdüse entlang der von der Kulissenführung 06 vorgegebenen Bewegungsbahn eliminiert werden.

Die Umlenkung des Laserstrahls 09 an der weiteren Umlenkung 14 kann unter dem selben Winkel wie in der Umlenkeinrichtung 08 erfolgen. Dabei kann die Richtung in entgegengesetzter Richtung wie in der Umlenkeinrichtung 08 erfolgen.

Die Umlenkeinrichtung 08 zur Umlenkung des Laserstrahls 09 und/oder die gegebenenfalls vorgesehene Umlenkung 14 können ein oder mehrere Prismen mit in diesen stattfindender Totalreflexion und/oder Spiegel umfassen.

Die Umlenkeinrichtung 08 zur Umlenkung des Laserstrahls 09 und/oder die gegebenenfalls vorgesehene Umlenkung 14 können zur Behandlung des Laserstrahls 09, beispielsweise zur Fokussierung des Laserstrahls 09, ein oder mehrere optische Elemente umfassen, beispielsweise in Form von optischen Linsen.

Bei der Laserlichtquelle 05 kann es sich um eine CO2-Laserlichtquelle handeln.

Eine Fahrzeugleuchte 13 umfasst im Wesentlichen einen von einem Leuchtengehäuse und einer Lichtscheibe umschlossenen Leuchteninnenraum und mindestens ein darin beherbergtes Leuchtmittel mit zumindest einer Lichtquelle, sowie gegebenenfalls zugehörige Elektronikbauteile für wenigstens eine Lichtfunktion der Fahrzeugleuchte 13. In dem Leuchteninnenraum kann mindestens ein von außerhalb des Leuchteninnenraums durch eine oder mehrere von der Lichtscheibe verschlossene Lichtöffnungen hindurch gesehen hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine zumindest innerhalb eines Wellenlängenbereichs elektromagnetischer Wellen transparente Abdeckung gebildet, welche den Leuchteninnenraum sowie die von diesem beherbergten Bauteile gegen Witterungseinflüsse schützt. Die Abdeckung ist hierbei wenigstens für einen Wellenlängenbereich transparent, der zumindest einen vom für das menschliche Auge sichtbaren Teil des Spektrums elektromagnetischer Wellen umfasst.

Beim überwiegenden Teil von Fahrzeugleuchten 13 handelt es sich beim für die Lichtscheibe verwendeten Material heutzutage um Kunststoff.

Beim für die Lichtscheibe verwendeten Material handelt es sich überwiegend um ein Polymethylmethacrylat (PMMA).

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Fahrzeugleuchte. Jede Fahrzeugleuchte 13 erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte 13 vorgesehen. Lichtfunktionen sind beispielsweise bei einer Ausgestaltung als Scheinwerfer eine die Fahrbahn ausleuchtende Funktion, oder bei einer Ausgestaltung als Signalleuchte speziell bei Kraftfahrzeugen eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten 13 im Automobilbereich sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

PMMA kann beispielsweise mittels einer CO2-Laserquelle geschnitten werden. Auch andere Laserlichtquellen 05 sind denkbar, welche Wellenlängen im Bereich von 800 nm bis 1 mm zu erzeugen in der Lage sind, ebenso wie grundsätzlich andere Materialien als PMMA für die Lichtscheibe ebenso wie für andere Bauteile 02 einer Fahrzeugleuchte 13 verwendete Kunststoffe denkbar sind.

Die Vorrichtung 01 erlaubt die Durchführung eines Verfahrens zum Laserschneiden von nachfolgend unter dem Begriff Bauteil 02 einer Fahrzeugleuchte 13 zusammengefassten Fahrzeugleuchten 13 und/oder Bauteilen 02 von Fahrzeugleuchten 13, insbesondere Lichtscheiben von Fahrzeugleuchten 13.

Ein derartiges Verfahren kann vorsehen, zunächst ein Bauteil 02 einer Fahrzeugleuchte 13 her- und zur Verfügung zu stellen, welches in Bezug auf seine Verwendung in oder an der fertigen Fahrzeugleuchte 13 und/oder in Bezug auf einen Einbauzustand in eine für eine Fahrzeugleuchte 13 vorgesehene Einbauöffnung beispielsweise in einer Karosserie eines Fahrzeugs in einem Übermaß ausgeführt ist.

Der Flächenverlauf des Bauteils 02 der Fahrzeugleuchte 13 kann eben oder zweidimensional oder dreidimensional gewölbt sein, wobei bei einer zweidimensional gewölbten Ausführung ein Schnitt in einer Richtung durch den Flächenverlauf hindurch eine Gerade bildet, und in einer dreidimensional gekrümmten Ausführung sich kein Schnitt mit einem geraden Verlauf findet.

Die Herstellung eines als eine Lichtscheibe ausgeführten Bauteils 02 einer Fahrzeugleuchte 13 erfolgt dabei so, dass die Lichtscheibe in auf einer Randfläche aufgelegtem Zustand nicht nur auf der Randfläche aufliegt, sondern in mindestens einer Richtung über den Außenrand der Randfläche übersteht und damit die Randfläche in Richtung von der Lichtöffnung weg über die Außenoberfläche hinaus überragt.

Die Randfläche ist hierbei wie nachfolgend definiert.

Das Leuchtengehäuse einer Fahrzeugleuchte 13 weist zumindest eine Lichtöffnung für einen Lichtaustritt wenigstens einer Lichtquelle des mindestens einen Leuchtmittels aus dem Leuchteninnenraum auf. An der fertigen Fahrzeugleuchte 13 ist die mindestens eine Lichtöffnung von der Lichtscheibe verschlossen. Wenigstens eine Wandung des Leuchtengehäuses umgibt die Lichtöffnung. Die Wandung weist eine der umgebenen Lichtöffnung zugewandte Innenoberfläche und eine der umgebenen Lichtöffnung abgewandte Außenoberfläche auf. Die Randfläche läuft um die Lichtöffnung um. Die Randfläche grenzt entlang eines Innenrands an die Innenoberfläche und entlang eines Außenrands an die Außenoberfläche an und verbindet zwischen Innenrand und Außenrand die Innenoberfläche und die Außenoberfläche. Der Innenrand spannt eine Fläche der Lichtöffnung auf. Die Kontur des um die Lichtöffnung umlaufenden Innenrands der Randfläche widerspiegelt den Flächenverlauf der Lichtöffnung.

Die Randfläche setzt diesen Flächenverlauf vom Innenrand zum Außenrand fort.

Der Flächenverlauf kann wie bereits zum Bauteil 02 im Allgemeinen angemerkt eben oder zweidimensional gewölbt, wobei ein Schnitt in einer Richtung durch den Flächenverlauf eine Gerade bildet, oder dreidimensional gekrümmt verlaufen, wo sich kein Schnitt mit einem geraden Verlauf findet.

Vorzugsweise wird die Lichtscheibe dabei so hergestellt, dass sie wenn sie auf die Randfläche aufgelegt ist, allseitig über den Außenrand der Randfläche übersteht. Mit anderen Worten überragt die Lichtscheibe vorzugsweise in mehr als einer Richtung, besonders bevorzugt allseitig den Außenrand und damit die Randfläche in Richtung von der Lichtöffnung weg.

Anschließend kann das Verfahren vorsehen, das zu beschneidende Bauteil 02 einer Fahrzeugleuchte 13 in einer Aufnahme 10 ortsfest zu fixieren.

In jedem Falle sieht das Verfahren vor, eine Laserlichtquelle 05 in drei voneinander in mathematischem Sinne unabhängigen Richtungen translatorisch und um drei voneinander in mathematischem Sinne unabhängigen Achsen rotatorisch im Raum zu bewegen, den von der Laserlichtquelle 05 ausgehenden Laserstrahl 09 auf eine herzustellende Schnittkante 07 des ortsfest gehaltenen Bauteils 02 einer Fahrzeugleuchte 13 umzulenken, wobei der dem auch als Laserdüse bezeichneten Umlenkpunkt 11 entsprechende Ort der Umlenkung des Laserstrahls 09 einerseits entlang einer dem Verlauf der herzustellenden Schnittkante 07 in mathematischem Sinne ähnlichen, ortsfesten Bahnkurve mechanisch geführt ist, und andererseits bevorzugt nur in genau einer Richtung entlang mindestens eines Abschnitts B-C des Verlaufs des von der Laserlichtquelle 05 ausgehenden Laserstrahls 09 gegenüber der Laserlichtquelle 05 beweglich angeordnet ist, und die mechanische Führung des Orts der Umlenkung lediglich lokal normal zur ortsfesten Bahnkurve erfolgt, wohingegen die Bewegung des Orts der Umlenkung entlang der ortsfesten Bahnkurve durch die Bewegung der Laserlichtquelle 05 im Raum gesteuert erfolgt.

Mit anderen Worten ist der Ort der Umlenkung des Laserstrahls 09 einerseits entlang einer dem Verlauf der herzustellenden Schnittkante 07 in mathematischem Sinne ähnlichen, ortsfesten Bahnkurve mechanisch geführt ist, und andererseits in einer Richtung parallel zu mindestens einem Abschnitt B-C des Verlaufs des von der Laserlichtquelle 05 ausgehenden Laserstrahls 09 entlang des entsprechenden Abschnitts B-C gegenüber der Laserlichtquelle 05 beweglich.

Die Bewegung der Laserlichtquelle im Raum führt damit den Ort der Umlenkung des Laserstrahls 09 auf die herzustellende Schnittkante 07 des Bauteils 02 der Fahrzeugleuchte 13 entlang der der herzustellenden Schnittkante 07 in mathematischem Sinne ähnlichen Bahnkurve.

Ungenauigkeiten der Bewegung der Laserlichtquelle 05 im Raum haben dabei keine oder eine nur geringe Auswirkung auf den Verlauf der herzustellenden Schnittkante 07.

In der ein Teilgebiet der Mathematik darstellenden Geometrie sind zwei Figuren genau dann zueinander ähnlich, wenn sie durch eine häufig als Ähnlichkeit bezeichnete Ähnlichkeitsabbildung ineinander überführt werden können. Im Sinne der vorliegenden Erfindung sind die Bahnkurve, entlang welcher der Ort der Umlenkung während der Bewegung der Laserlichtquelle im Raum geführt wird, und der Verlauf der herzustellenden Schnittkante ähnlich, wenn eine geometrische Abbildung existiert, die sich aus zentrischen Streckungen und Kongruenzabbildungen, wie beispielsweise Verschiebungen, Drehungen, Spiegelungen zusammensetzen lässt und die Bahnkurve auf die herzustellende Schnittkante abbildet. Winkel und Streckenverhältnisse stimmen bei durch die Bahnkurve und die herzustellende Schnittkante gebildeten, ähnlichen Figuren überein. Ähnlichkeit erweitert somit die Kongruenz um die Möglichkeit der Streckung.

Das Verfahren sieht demnach vor, den von der Laserlichtquelle 05 ausgehenden Laserstrahl 09 nicht direkt auf eine an einem von der Laserlichtquelle 05 beabstandeten, ortsfesten, zu beschneidenden Bauteil 02 einer Fahrzeugleuchte 13 herzustellende Schnittkante 07 zu richten, sondern auf eine Umlenkeinrichtung 08, die entlang einer von der Führung der Laserlichtquelle 05 im Raum unabhängigen, der herzustellenden Schnittkante 07 in mathematischem Sinne ähnlichen, beispielsweise durch eine Kulissenführung 06 gebildete Bahnkurve mechanisch geführt ist. Die Neigung der Umlenkeinrichtung 08 zu einem lokalen Abschnitt der Bahnkurve ebenso wie der Fortschritt der Bewegung der Umlenkeinrichtung 08 entlang der Bahnkurve wird durch die Bewegung der Laserlichtquelle 05 im Raum gesteuert. Die Laserlichtquelle 05 und die Umlenkeinrichtung 08 sind hierzu in einer parallel zu einem im Verlauf des Laserstrahls 09 ausgehend von der Laserlichtquelle 05 vor der Umlenkung an der Umlenkeinrichtung 08 liegenden Abschnitt B-C des Laserstrahls 09 verlaufenden Richtung relativ zueinander beweglich miteinander verbunden, wohingegen Bewegungen in einer anderen Richtung, als der parallel zu dem im Verlauf des Laserstrahls 09 ausgehend von der Laserlichtquelle 05 vor der Umlenkung an der Umlenkeinrichtung 08 liegenden Abschnitt B-C des Laserstrahls 09 verlaufenden Richtung im Bereich diesen Abschnitts B-C ausgeschlossen sind.

Das Verfahren kann vorsehen, dass zusätzlich die Neigung des Orts der Umlenkung um eine die ortsfeste Bahnkurve lokal tangierende Achse durch die Bewegung der Laserlichtquelle 05 im Raum gesteuert erfolgt.

Das Verfahren kann vorsehen, dass die Umlenkung des Laserstrahls 09 am Ort der Umlenkung in konstantem Winkel stattfindet, vorzugsweise unter einem Winkel von 90°.

Das Verfahren kann vorsehen, dass der Laserstrahl zwischen der Laserlichtquelle 05 und dem mechanisch entlang der einer herzustellenden Schnittkante 07 in mathematischem Sinne ähnlichen ortsfesten Bahnkurve geführten Ort der Umlenkung wie bereits in Verbindung mit der Vorrichtung 01 beschrieben mindestens ein weiteres mal umgelenkt wird. Eine solche weitere Umlenkung kann in der selben Richtung oder in einer anderen, beispielsweise entgegengesetzten Richtung unter dem selben Winkel wie am Ort der Umlenkung erfolgen.

Hierdurch kann ein besonders kompakter Aufbau einer Vorrichtung 01 zur Durchführung des Verfahrens erhalten werden, bei dem die Laserlichtquelle 05 grundsätzlich auf das zu beschneidende Bauteil 02 gerichtet im Raum geführt wird, der Laserstrahl 09 aber zunächst in einer Richtung zum Ort der Umlenkung umgeleitet wird, in genau welcher Richtung der Ort der Umlenkung beweglich gegenüber der Laserlichtquelle 05 angeordnet beziehungsweise beweglich mit der Laserlichtquelle 05 verbunden ist. Am Ort der Umlenkung findet wiederum die Umlenkung des Laserstrahls 09 09 auf die herzustellende Schnittkante 07 am zu beschneidenden Bauteil 02 statt.

In Verbindung mit einer weiteren Umlenkung kann nicht nur eine Beweglichkeit zwischen dem Ort der Umlenkung und der Laserlichtquelle 05 parallel zum von der Laserlichtquelle 05 kommend am Ort der Umlenkung eintreffenden Laserstrahl 09 vorgesehen sein, sondern auch eine zusätzliche Beweglichkeit entlang eines vorzugsweise unter einem rechten Winkel zum von der Laserlichtquelle 05 kommend am Ort der Umlenkung eintreffenden Laserstrahl 09 verlaufenden Abschnitts B-C des Laserstrahls 09 von der Laserlichtquelle 05 kommend zur weiteren Umlenkung 14, bevor der Laserstrahl 09 dann von der weiteren Umlenkung 14 zum Ort der Umlenkung umgelenkt wird. Hierdurch sind Bewegungen (Δs) zwischen den Punkten A und B sowie Bewegungen zwischen den Punkten B und C entlang des Verlaufs des Laserstrahls 09 in Fig. 1 möglich, bei gleichzeitig prozesssicherer Laserstrahlzuführung.

Das Verfahren kann vorsehen, dass die Laserlichtquelle 05:
- vermittels eines Manipulators 03 translatorisch und rotatorisch im Raum bewegt wird, und/oder
- an einem vermittels eines Manipulators 03 in drei voneinander in mathematischem Sinne unabhängigen Richtungen im Raum translatorisch und um drei voneinander in mathematischem Sinne unabhängigen Achsen rotatorisch beweglich angetriebenen Manipulatorkopf 04 geführt wird.

Das Verfahren kann außerdem vorsehen, im Anschluss an die Herstellung einer Schnittkante durch Laserschneiden das Bauteil 02 aus der Aufnahme 10 zu entnehmen.

Im Anschluss hieran kann das Bauteil 02 einer Qualitätskontrolle unterzogen werden. Dabei kann die Maßhaltigkeit des zugeschnittenen Bauteils 02 kontrolliert werden.

Dabei kann das Zuschneiden des Bauteils 02 anhand der in einer solchen Qualitätsprüfung kontrollierten Maßhaltigkeit des zugeschnittenen Bauteils 02 kalibiriert werden.

Die Qualitätskontrolle findet vorzugsweise in Linie mit dem Produktionsablauf statt oder ist im Produktionsablauf untergebracht. Wichtig ist hervorzuheben, dass grundsätzlich auch denkbar ist, die Maßhaltigkeit direkt nach dem Zuschneiden zu prüfen, während das Bauteil 02 noch in der Aufnahme 10 liegt.

Nach der Entnahme des Bauteils 02 aus der Aufnahme 10 kann das Bauteil 02 in eine Transportverpackung eingebracht und bis zu seiner weiteren Verwendung gelagert und/oder transportiert, und/oder einer Montagelinie zugeführt werden.

Sowohl die Vorrichtung 01, als auch das Verfahren lassen toleranzausgleichenden Bewegungen (Δs) entlang des Verlaufs des Laserstrahls 09 von der Laserlichtquelle 09 bis zum durch den Umlenkpunkt 11 innerhalb der Umlenkeinrichtung 08 gebildeten Ort der Umlenkung zu, beispielsweise entlang der Punkte A - B - C in Fig. 1, bei gleichzeitig prozessicherer Zuführung des Laserstrahls 09. Dabei werden Störgrößen ausgehend von der erzielbaren Genauigkeit der Steuerung der Bewegungen des Manipulatorkopfs 04 im Raum vermittels des Manipulators 03 nicht an die ortsfest geführte Laserdüse übertragen.

Sowohl die Vorrichtung, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung alternativ oder zusätzlich einzelne oder eine Kombination mehrerer zuvor in Verbindung mit dem Verfahren beschriebene Merkmale aufweisen, ebenso wie das Verfahren alternativ oder zusätzlich einzelne oder eine Kombination mehrerer zuvor in Verbindung mit der Vorrichtung beschriebene Merkmale aufweisen kann.

Die Erfindung ist insbesondere im Bereich der Herstellung von Fahrzeugleuchten sowie von Bauteilen für Fahrzeugleuchten gewerblich anwendbar.

### Bezugszeichenliste

- 01: Vorrichtung
- 02: Bauteil
- 03: Manipulator
- 04: Manipulatorkopf
- 05: Laserlichtquelle
- 06: Kulissenführung
- 07: Schnittkante
- 08: Umlenkeinrichtung
- 09: Laserstrahl
- 10: Aufnahme
- 11: Umlenkpunkt
- 12: Nut
- 13: Fahrzeugleuchte
- 14: Umlenkung

- A: Punkt entlang des Verlaufs des Laserstrahls 09
- B: Punkt entlang des Verlaufs des Laserstrahls 09
- C: Punkt entlang des Verlaufs des Laserstrahls 09

- A-B: Abschnitt des Verlaufs des Laserstrahls 09
- B-C: Abschnitt des Verlaufs des Laserstrahls 09

## Patentansprüche

**1.** Verfahren zum Laserschneiden von Bauteilen (02) von Fahrzeugleuchten (13), welches vorsieht:
- eine Laserlichtquelle (05) in drei voneinander in mathematischem Sinne unabhängigen Richtungen translatorisch und um drei voneinander in mathematischem Sinne unabhängigen Achsen rotatorisch im Raum zu bewegen,
- den von der Laserlichtquelle (05) ausgehenden Laserstrahl (09) auf eine herzustellende Schnittkante (07) eines ortsfest gehaltenen Bauteils (02) einer Fahrzeugleuchte (13) umzulenken,
wobei
- der Ort der Umlenkung (11) des Laserstrahls (09) einerseits entlang einer dem Verlauf der herzustellenden Schnittkante (07) in mathematischem Sinne ähnlichen, ortsfesten Bahnkurve (06) mechanisch geführt ist, und andererseits in einer Richtung parallel zu mindestens einem Abschnitt (B-C) des Verlaufs des von der Laserlichtquelle (05) ausgehenden Laserstrahls (09) entlang des entsprechenden Abschnitts (B-C) gegenüber der Laserlichtquelle (05) beweglich ist, und
- die mechanische Führung des Orts der Umlenkung (11) lokal normal zur ortsfesten Bahnkurve (06) erfolgt, wohingegen die Bewegung des Orts der Umlenkung (11) entlang der ortsfesten Bahnkurve (06) durch die Bewegung der Laserlichtquelle (05) im Raum gesteuert erfolgt.

**2.** Verfahren nach Anspruch 1, wobei zusätzlich die Neigung des Orts der Umlenkung (11) um eine die ortsfeste Bahnkurve (06) lokal tangierende Achse durch die Bewegung der Laserlichtquelle (05) im Raum gesteuert erfolgt.

**3.** Verfahren nach Anspruch 1 oder 2, wobei die Umlenkung des Laserstrahls (09) am Ort der Umlenkung (11) in konstantem Winkel stattfindet.

**4.** Verfahren nach Anspruch 3, wobei die Umlenkung des Laserstrahls (09) am Ort der Umlenkung (11) 90° beträgt.

**5.** Verfahren nach einem der Ansprüche 1 bis 4, wobei der Laserstrahl (09) zwischen der Laserlichtquelle (05) und dem Ort der Umlenkung (11) mindestens ein weiteres mal umgelenkt wird.

**6.** Verfahren nach Anspruch 5, wobei der Laserstrahl (09) zwischen der Laserlichtquelle (05) und dem Ort der Umlenkung (11) mindestens ein weiteres mal unter dem selben Winkel wie am Ort der Umlenkung (11) umgelenkt wird.

**7.** Verfahren nach Anspruch 5 oder 6, wobei der Laserstrahl (09) zwischen der Laserlichtquelle (05) und dem Ort der Umlenkung (11) mindestens ein weiteres mal unter dem selben Winkel wie am Ort der Umlenkung (11) umgelenkt wird, jedoch in einer der Umlenkung am Ort der Umlenkung (11) entgegengesetzten Richtung.

**8.** Verfahren nach einem der vorhergehenden Ansprüche, wobei der Flächenverlauf des Bauteils (02) eben oder zweidimensional gewölbt oder dreidimensional gekrümmt ist.

**9.** Verfahren nach einem der vorhergehenden Ansprüche, wobei die Laserlichtquelle (09):
- vermittels eines Manipulators (03) translatorisch und rotatorisch im Raum bewegt wird, und/oder
- an einem vermittels eines Manipulators (03) in drei voneinander in mathematischem Sinne unabhängigen Richtungen im Raum translatorisch und um drei voneinander in mathematischem Sinne unabhängigen Achsen rotatorisch beweglich angetriebenen Manipulatorkopf (04) geführt wird.

**10.** Vorrichtung (01) zum Laserschneiden von Bauteilen (02) von Fahrzeugleuchten (13), umfassend:
- einen Manipulator (03) mit einem dreidimensional translatorisch sowie rotatorisch in insgesamt sechs Freiheitsgraden im Raum beweglichen Manipulatorkopf (04),
- eine an dem Manipulatorkopf (04) fest angeordnete Laserlichtquelle (05), und
- eine ortsfeste Aufnahme (10) zum Halten eines Bauteils (02) einer Fahrzeugleuchte (13),
**gekennzeichnet durch**
eine mechanische Kulissenführung (06), an der eine Umlenkeinrichtung (08) für einen von der Laserlichtquelle (05) abgegebenen Laserstrahl (09) entlang einer einer am zu beschneidenden Bauteil (02) herzustellenden Schnittkante (07) in mathematischem Sinne ähnlichen ortsfesten Bahnkurve beweglich angeordnet ist, welche Umlenkeinrichtung (08) den von der Laserlichtquelle (05) kommenden Laserstrahl (09) auf eine herzustellende Schnittkante (07) an einem Bauteil (02) einer Fahrzeugleuchte (13) umlenkt, wobei die Umlenkeinrichtung (08) in einer Richtung parallel zu mindestens einem Abschnitt (B-C) des von der Laserlichtquelle (05) kommend an der Umlenkeinrichtung (08) eintreffenden Laserstrahls (09) beweglich mit dem Manipulatorkopf (04) und/oder der am Manipulatorkof (04) fest angeordneten Laserlichtquelle (05) verbunden ist und wenigstens innerhalb diesen Abschnitts (B-C) verbleibende Richtungen von dieser Beweglichkeit ausgeschlossen sind, so dass die Umlenkeinrichtung (08) **durch** eine Bewegung der Laserlichtquelle (05) im Raum entlang der von der Kulissenführung (06) vorgegebenen, einer am in der Aufnahme (10) gehaltenen Bauteil (02) herzustellenden Schnittkante (07) in mathematischem Sinne ähnlichen, ortsfesten Bahnkurve geführt wird, wodurch der von der Laserlichtquelle (05) kommende und von der Umlenkeinrichtung (08) auf die herzustellende Schnittkante (07) umgelenkte Laserstrahl (09) auf die herzustellende Schnittkante (07) gerichtet und entlang dieser geführt wird.

**11.** Vorrichtung nach Anspruch 10, wobei die Umlenkeinrichtung (08) in ihrer Neigung zur Bahnkurve frei beweglich ist.

**12.** Vorrichtung nach Anspruch 10, wobei die Umlenkeinrichtung (08) sowohl entlang der Bahnkurve, als auch in ihrer Neigung normal zur Bahnkurve gesehen gegenüber der Bahnkurve mechanisch geführt ist.

**14.** Vorrichtung nach Anspruch 10, 11 oder 12,
**gekennzeichnet durch**
eine CO2-Laserlichtquelle (05).

**15.** Vorrichtung nach einem der Ansprüche 10 bis 14, wobei:
- die Kulissenführung (06) durch einen oder mehrere Stäbe mit einem der Bahnkurve folgenden Verlauf ausgeführt ist, entlang dem oder denen die Umlenkeinrichtung beweglich ist, und/oder
- die Umlenkeinrichtung (08) entlang der Kulissenführung (06) vermittels einer oder mehreren Rollen oder vermittels Gleitlager geführt ist, und/oder
- zwischen der Laserlichtquelle (05) und der Umlenkeinrichtung (08) mindestens eine weitere Umlenkung (14) des Laserstrahls (09) vorgesehen ist, und/oder
- zwischen der Laserlichtquelle (05) und der Umlenkeinrichtung (08) mindestens eine weitere Umlenkung (14) des Laserstrahls (09) unter gleichem Winkel wie in der Umlenkeinrichtung (08) vorgesehen ist, und/oder
- zwischen der Laserlichtquelle (05) und der Umlenkeinrichtung (08) mindestens eine weitere Umlenkung (14) des Laserstrahls (09) unter gleichem Winkel in entgegengesetzter Richtung wie in der Umlenkeinrichtung (08) vorgesehen ist, und/oder
- die Umlenkeinrichtung (08) zur Umlenkung des Laserstrahls (09) ein oder mehrere Prismen und/oder Spiegel umfasst, und/oder
- die Umlenkeinrichtung (08) ein oder mehrere optische Elemente umfasst, und/oder
- die Umlenkeinrichtung (08) ein oder mehrere optische Elemente in Form von Linsen umfasst.
